# EUROPÄISCHE PATENTSCHRIFT

(11) **EP 1 038 254 B1**
(45) Veröffentlichungstag und Bekanntmachung des Hinweises auf die Patenterteilung: **13.03.2002**
(21) Anmeldenummer: 98966532.8
(22) Anmeldetag: 07.12.1998
(51) Int. Cl.: G06K 1/00

(54) **ANORDNUNG UND VERFAHREN ZUR ENERGIEFERNVERSORGUNG EINES ELEKTRONISCHEN INFORMATIONSTRÄGERS**
REMOTE ENERGY SUPPLY PROCESS AND SYSTEM FOR AN ELECTRONIC INFORMATION CARRIER
DISPOSITIF ET PROCEDE POUR L'ALIMENTATION EN ENERGIE A DISTANCE D'UN SUPPORT D'INFORMATIONS ELECTRONIQUE

(30) Priorität: 08.12.1997 DE 19755893
(43) Veröffentlichungstag der Anmeldung: 27.09.2000
(73) Patentinhaber: Coreta GmbH, 01307 Dresden (DE)
(72) Erfinder: Coreta GmbH, 01307 Dresden (DE)
(74) Vertreter: Hengelhaupt, Jürgen, Dipl.-Ing.
(86) Internationale Anmeldenummer: DE9803642
(87) Internationale Veröffentlichungsnummer: WO9930266

(56) Entgegenhaltungen:
- EP-A- 0 591 021
- DE-A- 4 013 978
- DE-A- 4 308 372
- DE-C- 19 608 515
- FR-A- 2 336 741
- US-A- 5 159 580

## Beschreibung

Die Erfindung betrifft ein Verfahren und eine Anordnung zur Energie- und Informationsübertragung mittels Ultraschall.

Es sind bereits Verfahren und Anordnungen bekannt, bei denen in einer Kommunikationsanordnung separater elektronischer Kommunikationseinheiten von einem Basisgerät aus andere Kommunikationseinheiten mit Energie versorgt werden, um in diesen auf elektrochemische Energiespeicher, wie Akkumulator oder Batterie, verzichten zu können. Bei dieser Form der Energieversorgung besteht kein Ausfallrisiko infolge eines erschöpften Energiespeichers, es ist kein Energiespeicherwechsel erforderlich und die entsprechenden Kommunikationseinheiten sind wartungsfrei sowie kompakt, völlig geschlossen und damit auch sehr robust gestaltbar.
Die Übertragung der Energie und/oder der Information kann kontaktbehaftet oder berührungslos erfolgen, etwa über elektrisch leitende Verbindungen, mit Ultraschall, auf optischem Wege oder mittels Radiofrequenzwellen. Jede dieser Übertragungsarten besitzt spezifische Vor- und Nachteile.
Der Vorteil der Verwendung von Ultraschalls besteht insbesondere darin, dass er sich in allen stofflichen Medien ausbreitet. In der EP 0536 430 A1 (H04B 10/00) ist ein Verfahren zur Energieversorgung eines fernsteuernden Handsenders, z. B. für ein Kfz-Schliesssystem, mittels Ultraschall beschrieben. Der Handsender verfügt über einen Energiespeicher in Form eines Kondensators und erhält die Nachladeenergie berührungslos über den Luftweg vom Fahrzeug aus. In der JP 60-85637 (H04B 11/00) ist ein Ultraschallinformationsaustausch zwischen einem externen Gerät und einem elektronischen Kartenrechner dargestellt. Der Kartenrechner wird hierzu in das Gerät eingeschoben und die Ultraschallübertragung erfolgt über zueinander nah aber berührungslos angeordnete piezoelektrische Elemente. In der DE 196 08 515 C1 (G06K 19/07) ist eine Chipkarte mit piezoelektrischer Membran dargestellt. Über diese Membran nimmt die Chipkarte - eingeschoben in ein Lesegerät, durch Federn angedrückt, jedoch im Bereich der Membran das Lesegerät nicht berührend - Ultraschallenergie auf.
Die berührunglose Übertragungsweise kann hinsichtlich Handhabungskomfort und Flexibilität Vorteile aufweisen. Andererseits sind Luftschallverfahren mit hohen Übertragungsverlusten verbunden. Wie die o. g. Schriften verdeutlichen, kann durch kurze Übertragungswege oder - wie in der EP 0536 430 bemerkt - einer Schallbündelung diesem Nachteil entgegengewirkt werden.

Akustische Wellen breiten sich in kondensierten Stoffen - metallischen wie nichtmetallischen-wesentlich besser aus als in Gasen. Besonders durch Metalle hindurch besitzt Ultraschall einzigartige Übertragungsvorteile gegenüber Radiofrequenztransponder-, Funk- oder optischen Verfahren, die hier nicht einsetzbar sind, da Metalle für Radiowellen oder optische Strahlung praktisch nicht durchlässig sind. Dagegen erlaubt die geringe Schallabsorption von Metallen, Informationen mit Ultraschall auch über längere Strecken zu übertragen, so über Heizungsrohrsysteme in Gebäuden (DE 92 10 894 (H04B 11/00)), bewegte Maschinenelemente (DE 40 13 978 A1 (H04B 11/00)) oder das Metallgerüst von Schiffen (US 5 159 580 (H04B11/00)). Die Ultraschallsende- und/oder Empfangseinheiten sind dabei entweder am jeweiligen Schallleiter fest installiert oder mit einer Spezialvorrichtung fest aufgeklemmt (US 5 159 580).

In der US 5 594 705 (H04B 17/00) wird eine Anordnung zur Energie- und Informationsübertragung mit Ultraschall zwischen zwei Ultraschallwandlern beschrieben, die beidseitig eines nichtpiezoelektrisches Mediums und zueinander direkt gegenüber angeordnet sind. Die Anordnung ist an Hand einer Messanordnung zur Aufnahme und Durchleitung von Druckmesswerten durch eine Schiffswand in den Innenraum eines Schiffes dargestellt, wobei die schiffsaussenseitig angeordnete Messanordnung durch die Schiffswand hindurch über Ultraschall mit Energie versorgt wird.

Bei allen eben genannten Schriften zur kontaktbehafteten Energie- und/oder Informationsübertragung sind die Kommunikationseinheiten fest installiert und der als Übertragungsmedium verwendete Gegenstand dient lediglich als Schallleiter zur Übertragung von externen Daten. Für Anwendungsfälle, wo keine grossen Messanordnungen notwendig sind, wo nur Informationen in einem Gegenstand hinterlegt oder abgefragt werden sollen, wo feste Verknüpfungen stören und wo der Gegenstand in seinem Aussehen, in seiner Funktion und seiner Mobilität möglichst nicht beeinträchtigt werden soll, sind die bekannten Anordnungen und Verfahren nicht geeignet bzw. nicht einsetzbar. Solche Anwendungen stellen etwa die Kennzeichnung von Gegenständen oder die Speicherung eines Codes in einem Schlüssel dar.

Der Erfindung liegt daher die Aufgabe zugrunde, mit einfachen Mitteln und auf einfache Weise Kennzeichnungsinformationen und/oder Codes in Gegenstände zu hinterlegen und von diesen abzufragen.

Die Aufgabe wird durch ein Verfahren nach Patentanspruch 1 und einer Anordnung gemäss Patentanspruch 3 zur Durchführung des Verfahrens gelöst.

Die vorgeschlagene Lösung des Patentanspruches 1 stellt ein Verfahren zur Energie- und Informationsübertragung mittels Ultraschall zwischen einem Basisgerät und einem Informationsträger dar, wobei sowohl das Basisgerät als auch der Informationsträger Ultraschallsende- und Empfangseinheiten aufweisen. Die Ultraschallsende- und Empfangseinheiten beinhalten zumindest einen Ultraschallwandler. Das Basisgerät ist einerseits Energiequelle für den Informationsträger und andererseits diejenige Kommunikationseinheit, die Informationen vom Informationsträger abfragt oder an diesen sendet. Der Informationsträger unterscheidet sich von solchen Kommunikationseinheiten, wie in der US 5 594 705 beschrieben, die keine Informationsträger darstellen, sondern - ausserhalb des Kommunikationskanals zum Basisgerät - Daten aufnehmen und diese dem Basisgerät übermitteln. Der Informationsträger ist in oder an einem Gegenstand akustisch fest angekoppelt, dass heisst so aufgeklebt, aufgekittet, aufgelötet, aufgeklemmt, aufgeschraubt oder ähnlich befestigt, dass möglichst geringe Übertragungsverluste an der Grenzfläche zum Gegenstand auftreten. Erfindungsgemäss werden zur Realisierung einer Kommunikation Basisgerät und Gegenstand durch Herstellung eines Kurzzeitkontaktes zusammengeführt. Unter einem Kurzzeitkontakt wird eine Berührung von geringer Dauer verstanden, die jederzeit sofort, reversibel und ohne besonderen Aufwand gelöst werden kann. An der zwischen Basisgerät und Gegenstand gebildeten Kontaktstelle liegt eine Energiesenke vor, über die akustische Energie in den Gegenstand eintreten und bis zum Informationsträger abfliessen kann. Die vorzugsweise im Resonanzbereich der Schallfrequenz oder auch in einer Nebenanregung arbeitende Ultraschallsende- und Empfangseinheit des Informationsträgers stellt eine besonders starke Energiesenke dar. Das resultierende Potentialgefälle lässt - solange die Berührung zwischen Basisgerät und Gegenstand aufrecht erhalten wird - beständig akustische Energie nachfliessen. Durch diese Energieaufnahme wird der Informationsträger eingeschaltet, geht infolge der bereitgestellten elektrischen Energie in den Betriebszustand über und löst nun eine Ultraschallinformationsübertragung über die Kontaktstelle zwischen Gegenstand und Basisgerät aus.

Bei festinstallierten Anordnungen ist eine solche Vorgehensweise nicht möglich. Insbesondere ist dort immer ein elektrischer Schaltvorgang auf der Basisgeräteseite erforderlich, um die mit Energie zu versorgende Kommunikationseinheit in den Betriebszustand zu überführen und so eine Informationsübertragung zu veranlassen. Das Verfahren nach Patentanspruch 1 erlaubt dagegen, auf mechanische Weise - durch die Berührung von Gegenstand und Basisgerät - von beiden Seiten aus - je nachdem ob der Gegenstand an das Basisgerät herangeführt wird oder umgekehrt - die Herbeiführung des Betriebszustandes im Informationsträger sowie eine Informationsübertragung zu initiieren. Da erst dann akustische Energie in den Gegenstand und damit zum Informationsträger gelangt, wenn mit der Bestimmung der Kontaktstelle der Übertragungsweg festgelegt und durch die Berührung während des Kurzzeitkontaktes freigegeben ist, wird weiterhin gewährleistet, dass der Informationsträger auch nur dann in den Betriebszustand übergeht, wenn tatsächlich eine Informationsübertragung beabsichtigt ist. Dies ist aus energetischer Sicht und - weil eine Berührung ein eindeutiger Akt ist - für die Kontrolle der Informationsübertragung, zum

Schutz gegen unbefugten Speicherzugriff sowie datenschutzrechtlich von erheblichem Vorteil.

Eine ausreichende Energieübertragung vom Basisgerät zum Informationsträger setzt eine gute akustische Kopplung über die gesamte Kommunikationsstrecke voraus. An der Kontaktstelle zwischen dem Basisgerätes und dem Gegenstand ist hierzu ein oberflächlich-körperlicher Kontakt, eine Berührung erforderlich. In der US 5 594 705 wird die Zuverlässigkeit und Qualität der Ultraschallübertragung durch die Festinstallation sichergestellt, was stets mit einer Oberflächenveränderung am Gegenstand verbunden ist und gegebenenfalls optisch oder funktional stört. Dagegen impliziert das Verfahren nach Patentanspruch 1 eine relative Freiheit bei der Zusammenführung von Gegenstand und Basisgerät, wobei eine räumlichen Nähe der kommunizierenden Ultraschallsende- und Empfangseinheiten im Allgemeinen vorteilhaft ist. Eine zuverlässige und effiziente Ultraschallübertragung ist hier somit über die Flexibilität bei der Wahl einer geeigneten Kontaktstelle - etwa eine blanke Metallfläche - erreichbar. Daneben sorgt in vielen Fällen die träge Kraft der Massen von Basisgerät und Gegenstand sowie die Kraft für deren Zusammenführung für eine ausreichende und zeitlich stabile Andruckkraft. Darüber hinaus sind zusätzliche Mittel, wie Flüssigkeiten, die als akustische Koppelflüssigkeiten wirken, möglich.

Das Verfahren nach Patentanspruch 1 eignet sich in erster Linie für solche Anwendungen, wo Kurzinformationen gespeichert und übertragen werden sollen. Ein breites Anwendungsgebiet, in dem das Verfahren nach Patentanspruch 1 mit grossem Vorteil eingesetzt werden kann, ergibt sich gemäss Patentanspruch 2 für Kennzeichnung, Kurzbeschreibung und Codes.

Bei Durchführung des Verfahrens nach Patentanspruch 1 sind der Gegenstand und das Basisgerät, nicht dagegen der Informationsträger, mechanischen Kontaktbelastungen ausgesetzt. Daher ist es nach Patentanspruch 3 zur Minderung dieser Belastungen und aus Gründen der Handhabung von Vorteil, wenn die Ultraschallsende- und Empfangseinheit des Basisgerätes zur Herstellung des Kurzzeitkontaktes als separate oder spezifisch gestaltete, robuste Kontakteinheit ausgebildet ist, etwa als Handgerät in Form eines Stiftes oder als konstruktiv hervorgehobene Kontaktfläche.

Die Ultraschallsende- und Empfangseinheit des Informationsträgers hat die Funktionen der Energieversorgung, des Informationsempfangs und des Informationssendens zu erfüllen. Die entsprechenden Einheiten können getrennt oder nach Patentanspruch 4 in einer Einheit vereinigt sein. Eine getrennte Anordnung der Informationssende-, Informationsempfangs- und Energieversorgungseinheiten gestattet eine aufgabenangepasste Optimierung hinsichtlich Energie, Dimensionierung, Funktion, Frequenz und anderen Parametern. Dies betrifft sowohl den Ultraschallwandler als auch die vor- bzw. nachgelagerte Elektronik. In anderen Fällen wiederum kann eine gemeinsame Nutzung verschiedener Bauelemente bevorzugt sein, etwa wo eine Miniaturisierung des Informationsträgers insgesamt im Vordergrund steht. Nach Patentanspruch 4 besteht diese Möglichkeit bis hin zur völligen Verschmelzung in einer Einheit. Energie und Information werden dann über einen gemeinsamen Ultraschallwandler empfangen und durch eine nachgelagerte Elektronik getrennt. Umgedreht dient dieser Ultraschallwandler zum Versenden von Informationen.

Als Energieempfänger der Energieversorgungseinheit im Informationsträger eignen sich mit Vorteil Ultraschallwandler auf der Basis piezoelektrischer Materialien, wenngleich prinzipiell auch piezomagnetische, dynamoelektrische oder andere geeignete mechanoelektrische Wandler eingesetzt werden können, sofern sie die Energie akustisch initiierter mechanischer Schwingungen in elektrische Energie transformieren. Analoges gilt für die Informationssendeeinheit des Informationsträgers. Als Informationsempfänger eignen sich auch Wandler, wo physikalische Grössen, wie Kapazität, Widerstand und andere zur Registrierung von Schall oder Schwingung dienen.

Die nach Patentanspruch 5 realisierbare Anordnung aller Bauteile des Informationsträgers auf einer gemeinsamen Unterlage, etwa einer Keramik-, Kunststoff- oder Folienleiterplatte ist aus verschiedenen Gründen, wie Handhabung, Montage oder Miniaturisierung, vorteilhaft. Da über den körperlich-akustischen Kontaktweg eine effektive Energie- und Informationsübertragung realisierbar ist, kann insgesamt mit sehr geringen Energien und Leistungen gearbeitet werden. Dies zieht den grossen Vorteil nach sich, dass alle Komponenten des Informationsträgers - vom Wandler über Kondensatoren, als Energiezwischenspeicher, bis hin zu anderen elektronischen Halbleiterbauelementen - räumlich sehr klein gestaltet werden können. Erst dadurch können die mikrosystemtechnische Grössenordnungen nach Patentanspruch 6 erreicht werden, die die Unterbringung aller Informationsträgerkomponenten auf einer Fläche von nur wenigen mm² oder darunter gestatten.

Für die praktische Handhabung und wegen weiterer, unten genannter Gründe ist es vorteilhaft, den Informationsträger in kompakter Form, so nach Patentanspruch 7 in einem allseitig, etwa plastikvergossenen Körper oder nach Patentanspruch 8 als Kapsel vorliegen zu haben.

Gegebenenfalls ist es sinnvoll, neben dem akustischen Weg noch eine weitere Möglichkeit der Informationsübertragung zur Verfügung zu haben, etwa um vor der Unterbringung des Informationsträgers in den Gegenstand in bestimmte Speicherbereiche Informationen zu übertragen, die später nicht mehr gelöscht werden sollen. Dies ist mit der aussenseitigen Anordnung von mindestens zwei metallischen Anschlussstellen nach Patentanspruch 9, die elektrisch leitend mit elektronischen Komponenten des Informationsträgers verbunden sind, realisierbar.

Für eine breite Anwendung ist die Kombinationsfähigkeit eines Systems nach Patentanspruch 1 mit anderen Informations- und /oder Energieübertragungslösungen von Vorteil. Für den Fall des - stets energiesparenden - direkten elektrischen Kontaktes ist dies nach Patentanspruch 10 möglich, wo der Informationsträger im Bedarfsfall zusätzlich über die am Gegenstand angebrachten beiden metallischen Teile erreicht werden kann. Für einen multifunktionalen Gegenstand, etwa einem Schlüssel nach Patentanspruch 12, ist dies besonders vorteilhaft, wenn manche Schlösser über eine Ultraschall-, andere nur über eine elektrische Sende- und Empfangseinheit verfügen.

Das metallische Element nach Patentanspruch 11 kann ebenfalls vorteilhaft für Energiesparzwecke eingesetzt werden, da mit diesem auf einfache Weise eine Aktion ausgelöst werden kann, so etwa das Einschalten der Ultraschallsende- und Empfangseinheit des Basisgerätes - zeitlich begrenzt oder während der Haltezeit an den Kontakten.

Vorteile ergeben sich weiterhin auf dem Gebiet der Schliesstechnik. Neben der Plazierung eines Informationsträgers in konventionelle Schlüssel oder Schlüsselanhänger nach Patentanspruch 12 könnte nach Patentanspruch 13 auch beliebigen anderen Gegenständen leicht und unauffällig die Funktion eines Schlüssels übertragen werden, wobei diese äusserlich überhaupt nicht als solche erkennbar sind. Geeignet wären alle Gegenstände des täglichen Umfeldes, so etwa Schreibgeräte, Armbanduhren, Knöpfe, Brillen und andere.

Besondere Vorteile ergeben sich, wenn Schmuckgegenstände nach Patentanspruch 14 und insbesondere Ringe die Gegenstände darstellen. Letztere werden in enger Körperbindung getragen und weisen daher ein sehr geringes Verlustrisiko auf. Ebenso wären Karten nach Patentanspruch 15, insbesondere solche des Chipkartenformates, als Gegenstand vorteilhaft einsetzbar.

Besonders hervorzuheben wäre eine Anwendung im Automobilbereich entsprechend Patentanspruch 16. Hier könnte nicht nur das Fahrzeug als Gesamtprodukt sondern es könnten verschiedene Bauteile einzeln mit entsprechenden Informationsträgern ausgerüstet werden.

Das Verfahren nach Patentanspruch 1 und die Anordnung zum Verfahren gemäss Patentanspruch 3 bieten weiteste Möglichkeiten der Plazierung der Informationsträger in oder an Gegenstände. Besonders vorteilhaft ist nach Patentanspruch 17 eine Anordnung der - sehr klein gestaltbaren - Informationsträger in einer Ausnehmung, die etwa als Höhlung, Ausfräsung oder Sackloch gestaltet sein kann. Diese kann zusätzlich nach Patentanspruch 18 mit einem Verschluss versehen werden, so dass gegebenenfalls hinter dicken Materialschichten, irgendwo im Inneren, "tief im Produkt verborgen", von aussen nicht erkennbar und sehr sicher vor destruktiven mechanischen, chemischen, elektrostatischen, Strahlungs-, thermischen oder sonstigen Einflüssen geschützt, produktrelevante Informationen über die gesamte Existenzzeit des Produktes, beginnend bei der Herstellung, für Produktion, Vertrieb, Verkauf, Service bis zum Recycling abgelegt, gelesen oder neu eingeschrieben werden können. Dabei ist über ein chipinternes Sicherheitssystem ein selektiver Lese-/Schreibschutz leicht realisierbar. Nicht zuletzt ist eine völlig unauffällige, von aussen schwer oder nicht erkennbare Kennzeichnung für die Kriminalitätsvorbeugung und - verfolgung mit Vorteil einsetzbar.

Die Erfindung wird nachstehend anhand eines Ausführungsbeispiels näher erläutert.

In der Zeichnung zeigen:
**Fig.** 1 eine Skizze zur Erläuterung des Grundprinzips,
**Fig.** 2 eine Anordnung von zwei Schlössern für einen Gegenstand in Gestalt eines Fingerringes,
**Fig.** 3 eine Anordnung zum Zwecke der Kennzeichnung von Schmuck-Gegenständen,
**Fig.** 4 eine Anordnung mit einem Gegenstand Karte von üblichen Chipkartenformat,
**Fig.** 5 eine Teilanordnung zur Kennzeichnung des Gegenstandes Fahrrad.

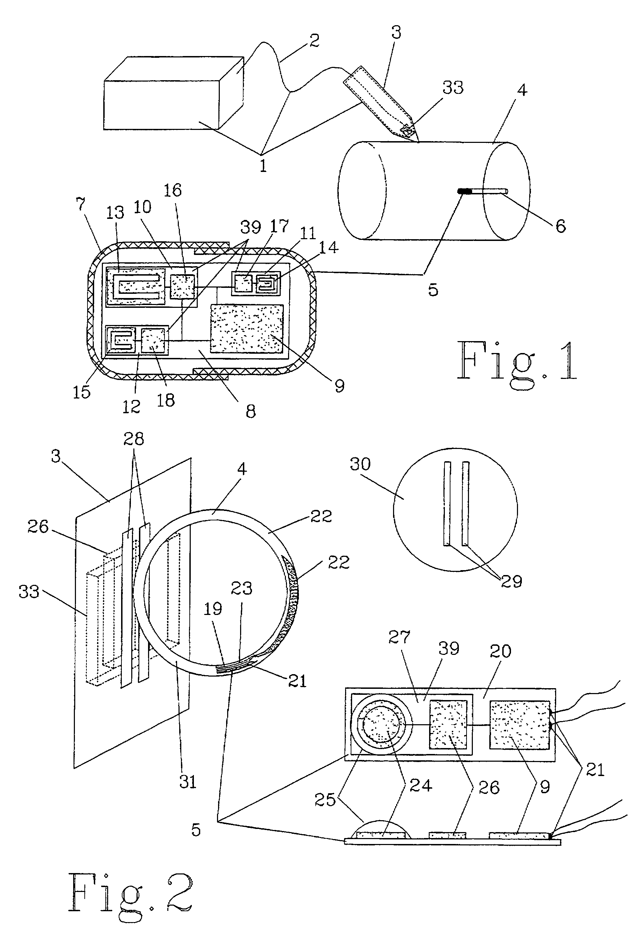

In **Fig.** 1 ist ein Basisgerät **1** dargestellt, das über ein Kabel **2** mit seiner Ultraschallsende- und Empfangseinheit **3** verbunden ist, die als Handgerät gestaltet ist. Die Ultraschallsende- und Empfangseinheit **3** vermag akustische Energie in Form von Ultraschall zu erzeugen, akustische Informationen zu senden und zu empfangen. Bei Berührung des Gegenstandes **4** - der einen Stahlblock darstellt und als Ausgangsmaterial zur Fertigung eines speziellen Getriebeteiles vorgesehen ist - durch die Ultraschallsende- und Empfangseinheit **3** des Basisgerätes **1** dringen akustische Wellen in den Gegenstand **4** ein und erreichen so auf körperlichem Wege den Informationsträger **5.** Der Informationsträger **5** ist am Ende einer als tiefes Sackloch ausgeführten Ausnehmung **6** des Gegenstandes **4** eingeklebt und damit vor jeglichem zufällig destruktivem Zugriff während der nachfolgenden Dreh- und Fräsbearbeitung geschützt. Der Informationsträger **5** ist in **Fig.** 1 noch mal vergrössert dargestellt und besteht aus einer zylindrischen, stählernen Kapsel **7** von 4 mm Durchmesser, in der sich auf einer Siliziumunterlage **8** die elektronische Informationsverarbeitungseinheit **9** - ein Mikrocontroller -, eine Energieversorgungseinheit **10,** eine Informationsempfangseinheit **11** und eine Informationssendeeinheit **12** befinden, die jeweils aus einem piezoelektrischen Wandler **13, 14, 15** und einer nachgelagerten Elektronik **16, 17,** die die über die piezoelektrischen Wandler **13, 14** erzeugte Elektrizität für die Verwendung im Informationsträger aufbereitet, bzw. einer vorgelagerten Elektronik **18,** die die zu versendenden Informationen als elektrische Signale dem piezoelektrischen Wandler **15** zuführt, bestehen. Die Trennung der einzelnen piezoelektrischen Wandler **13,14,15** und der zugehörigen Elektronik **16,17,18** ist aufgrund des hohen erreichbaren, halbleitertechnologischen Miniaturisierungsgrades möglich und erlaubt einen getrennten Empfang von Energie und Information sowie ein unabhängiges Senden von Information. Auf der Rückseite der Siliziumunterlage **8** wurde diese mit einem Kleber fest an die Kapsel **7** fixiert.

Mit der Anordnung in **Fig.** 1 kann der Bediener einer Werkzeugmaschine wesentliche Fertigungsdaten zu dem Getriebeteil aus dem Informationsträger **5** entnehmen und diese der Werkzeugmaschine zuführen sowie Informationen zum Ergebnis seiner Arbeit in den Informationsträger **5** einspeisen.

**Fig.** 2 zeigt einen Gegenstand **4** in Gestalt eines Fingerringes, die Ultraschallsende- und Empfangseinheit **3** des nicht explizit dargestellten Basisgerätes **1** - einem elektronischen Schloss - in Gestalt einer Platte, die an eine Fahrzeugtür angebracht wird, sowie eine elektrische Empfangseinheit in Gestalt einer Scheibe **30** für ein elektronisches Schloss in einem Briefkasten. Der Fingerring enthält in einer Ausnehmung **19** den Informationsträger **5**. Alle Elemente des Informationsträgers **5** sind auf einer flexiblen Unterlage **20** angeordnet. Er verfügt aussenseitig über zwei metallische Anschlussstellen **21,** die wiederum mit den zwei metallischen Teilen **22,** die hier durch den Ring selbst und ein vom Ring isoliert angebrachtes Ringelement dargestellt werden, verbunden sind. Die Ausnehmung **19** ist nach dem Einkleben des Informationsträgers **5** mit einem Verschluss **23** geschlossen worden. Der piezoelektrische Wandler **24** ist mit einer Haube **25** abgedeckt, damit dessen mechanisch schwingende Teile in ihrer Funktion nicht beeinträchtigt werden. Gemeinsam mit der Elektronik **26** bildet er ein Einheit **27**, die hier sowohl die Funktion der Energieversorgungseinheit **10,** der Informationsempfangseinheit **11** als auch der Informationssendeeinheit **12** übernimmt und insgesamt die Ultraschallsende- und Empfangseinheit **39** des Informationsträgers **5** darstellt.
Auf der basisgeräte-**1**-seitigen Ultraschallsende- und Empfangseinheit **3** in Gestalt der Platte befinden sich zwei Kontakte **28**, die durch Berührung mit dem Ring überbrückt werden. Der Ring selbst bewirkt dabei als metallisches Element **31** die Überbrückung. Dadurch wird die Ultraschallsende- und Empfangseinheit **3** des Basisgerätes **1** aktiviert und über den kontaktbehafteten akustischen Weg erfolgt der Informationsaustausch mit dem Informationsträger **5** im Fingerring. Das oben genannte Briefkastenschloss stellt kein Basisgerät dar, da es über keine Ultraschallsende- und Empfangseinheiten verfügt. Es wird über die beiden elektrischen Kontakte **29,** die sowohl zur elektrischen Energie- als auch zur elektrischen Informationsübertragung dienen, betätigt. Durch Berührung der beiden metallischen Teile **22** mit den Kontakten **29** erhält es den Öffnungscode.

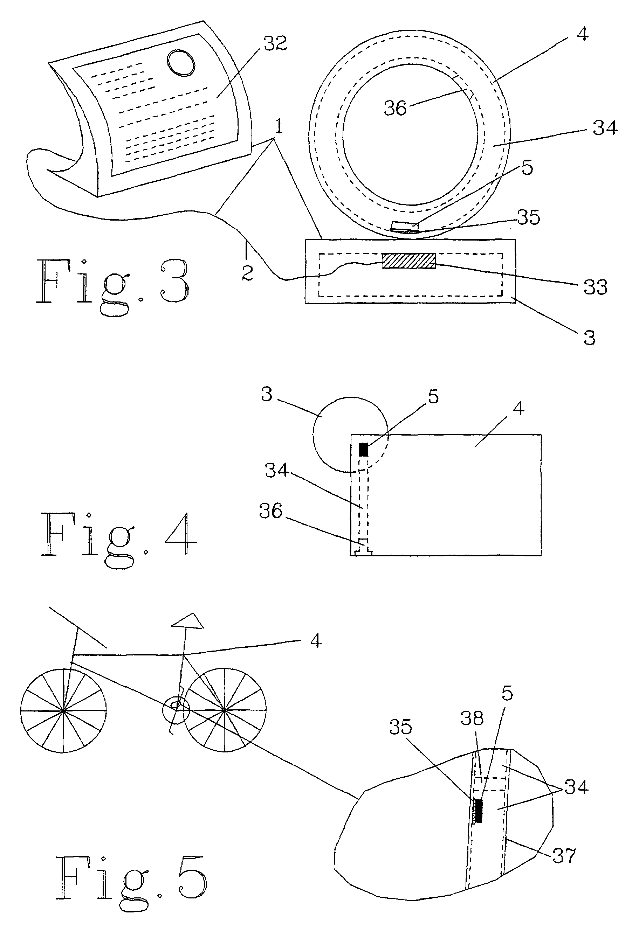

Die Anwendung der Erfindung zur Schmuckkennzeichnung ist in **Fig.** 3 skizziert. Das Basisgerät **1** stellt hier ein Lese- und Programmiergerät mit Bildschirm **32** dar und ist mit einem Kabel **2** mit seiner Ultraschallsende- und Empfangseinheit **3** verbunden, bei der unter einer Auflegeplatte aus Stahl ein piezoelektrischer Wandler **33** angebracht ist. Auf diese Auflegeplatte kann der Gegenstand **4**, der in der Darstellung der **Fig.** 3 die Gestalt eines Fingeninges aufweist aber ebenso auch eine Brosche, eine Uhr, ein Armband oder ein anderer Schmuckgegenstand sein kann, gelegt oder aufgedrückt werden. Im Gegenstand 4 befindet sich eine Ausnehmung **34** in Gestalt eines Hohlraumes. Über ein Loch kann der Informationsträger **5** in die Ausnehmung **34** eingeführt und mit Kleber **35** befestigt werden. Nach Abschluss dieser Montage ist das Loch mit einem Verschluss **36**, der aus dem gleichen Material, wie der Gegenstand **4** besteht, verschliessbar. Als Fügetechnik ist neben Kleben auch Hartlöten oder Schweissen möglich, wobei gegebenenfalls die Stelle, an der der Informationsträger **5** plaziert ist, gekühlt werden muss. Ist der Verschluss **36** mit dem Gegenstand **4** Fingerring verschweisst und die Oberfläche entsprechend nachbearbeitet, kann von aussen nicht erkannt werden, dass sich ein Informationsträger **5** im Fingerring befindet. Zur Gewährleistung der Kommunikation muss der Informationsträger **5** dem piezoelektrischen Wandler **33** nicht unbedingt, wie in **Fig.** 3 dargestellt, gegenüber stehen, wenngleich der kürzeste Weg im allgemeinen von Vorteil ist. Da der Informationsträger **5** im Gegenstand **4** vollständig von Metall umgeben ist, ist eine Zerstörung der Elektronik des Informationsträgers **5** durch mögliche äussere elektrostatische Felder oder Aufladungen praktisch ausgeschlossen.

Dies gilt auch im Falle der in **Fig.** 4 gezeigten Anwendung bei einem Gegenstand **4** in Form einer Chipkarte, die hier vollständig aus Metall besteht. Bevorzugt können Edelstahl oder Titanlegierungen eingesetzt werden. Derartige Chipkarten sind robuster als bekannte Kunststoffchipkarten gestaltbar, sowohl hinsichtlich der mechanischen Festigkeit, der Umweltbeständigkeit als auch des Schutzes vor elektrostatischen Gefahren. Auch die Handhabung ist - durch Auflegen auf die entsprechende Ultraschallsende- und Empfangseinheit **3,** die der Lese-/Schreibschnittstefle oder dem Lesegerät bei bekannten Chipkarten entspricht - denkbar einfach.

Auf eine weitere, sehr praktische Anwendung wird mit **Fig.** 5 hingewiesen. Durch die Plazierung des Informationsträgers in den Gegenstand **4** Fahrrad, etwa in den Rahmenteil **37**, ist eine sehr einfache und unauffällige Möglichkeit gegeben, Fahrräder zu kennzeichnen. Die Entfernung einer solchen Kennzeichnung kann durch einen Pfropfen **38** verhindert bzw. so stark erschwert werden, dass sich dies nur bei einer Zerstörung des Gegenstandes **4** Fahrrad erreichen lässt - was auch nicht im Interesse von Fahrraddieben ist.

Insgesamt verdeutlicht das in den **Fig.** 1-5 dargestellte Ausführungsbeispiel, dass beliebige Gegenstände **4** mit einem Informationsträger **5** - etwa der Art wie in den **Fig.** 1 und 2 gezeigt - ausgestattet werden können. Die Miniaturisierung des Informationsträgers **5** ist dabei eine wichtige Voraussetzung, um auch kleine Gegenstände mit einen Informationsträger **5** ausrüsten zu können, um Gegenstände äusserlich sowie hinsichtlich ihrer Eigenschaften und ihrer Einsatzgebiete möglichst wenig zu beeinträchtigen und um ihre Mobilität nicht einzuschränken. Durch die Erfindung werden Gegenstände kommunikationsfähig. Einleitung und Aufrechterhaltung der mono- oder bidirektionalen Kommunikation erfolgt dabei für die Erfindung typischerweise bei dem Kontakt der Oberflächen von Ultraschallsende- und Empfängseinheit **3** des Basisgerätes **1** mit den Gegenständen **4**. Die Realisierung des Kontaktes, der im allgemeinen nur während der Energie- und Informationsübertragung besteht, kann durch manuelles oder maschinelles Heranführen der Ultraschallsende- und Empfangseinheit **3** an den Gegenstand **4** oder umgekehrt erfolgen. Die der Kommunikation zugrundeliegende Information kann sowohl, wie in **Fig.** 1-5 dargestellt, von aussen über die Ultraschallsende- und Empfangseinheit **3** eines Basisgerätes **1** eingetragen als auch davon unabhängig dem Informationsträger **5** zugeführt und dort gespeichert werden. Dies kann akustisch oder auf andere Weise, so über elektrische Leitungen, erfolgen.

### Liste der Bezugszeichen

- **1**: Basisgerät
- **2**: Kabel
- **3**: Ultraschallsende- und Empfangseinheit
- **4**: Gegenstand
- **5**: Informationsträger
- **6**: Ausnehmung
- **7**: Kapsel
- **8**: Siliziumunterlage
- **9**: elektronische Informationsverarbeitungseinheit
- **10**: Energieversorgungseinheit
- **11**: Informationsempfangseinheit
- **12**: Informationssendeeinheit
- **13**: piezoelektrischer Wandler
- **14**: piezoelektrischer Wandler
- **15**: piezoelektrischer Wandler
- **16**: nachgelagerte Elektronik
- **17**: nachgelagerte Elektronik
- **18**: vorgelagerte Elektronik
- **19**: Ausnehmung
- **20**: flexible Unterlage
- **21**: metallischeAnschlussstelle
- **22**: metallische Teile
- **23**: Verschluss
- **24**: piezoelektrischer Wandler
- **25**: Haube
- **26**: Elektronik
- **27**: Einheit
- **28**: Kontakte
- **29**: Kontakte
- **30**: Scheibe
- **31**: metallisches Element
- **32**: Bildschirm
- **33**: piezoelektrischer Wandler
- **34**: Ausnehmung
- **35**: Kleber
- **36**: Verschluss
- **37**: Rahmenteil des Gegenstandes
- **38**: Pfropfen
- **39**: Ultraschallsende- und Empfangseinheit

## Patentansprüche

1. Verfahren zur Energie- und Informationsübertragung mittels Ultraschall zwischen einem Basisgerät und einem in oder an einem Gegenstand in akustisch fester Kopplung angeordneten elektronischen Informationsträger, welcher definierte abgespeicherte Informationen enthält, wobei sowohl Basisgerät als auch Informationsträger Ultraschallsende- und Empfängseinheiten aufweisen und
- bei Zusammenführung von Basisgerät und Gegenstand durch Herstellen eines direkten Kurzzeitkontaktes über die hierdurch gebildete Kontaktstelle das Basisgerät Ultraschall in den Gegenstand aussendet,
- der Informationsträger dem Ultraschallfeld im Gegenstand bei der Berührung während des Kurzzeitkontaktes Energie entnimmt, damit eingeschaltet wird und
- in den Betriebszustand übergeht und
- eine Ultraschallinformationsübertragung zwischen dem Informationsträger und dem Basisgerät über die Kontaktstelle auslöst.

2. Verfahren nach Patentanspruch 1, **dadurch gekennzeichnet,**
**dass** die im Informationsträger abgespeicherten Informationen zur Kennzeichnung des Gegenstandes und/oder zu dessen Beschreibung und/oder zur Beschreibung seines Zustandes und/oder seiner logistischen Daten und/oder seiner Produktionsdaten dienen oder Codes sind.

3. Anordnung zur Durchführung des Verfahrens nach Patentanspruch 1 mit einem Basisgerät (1) und einem Informationsträger (5), wobei der Informationsträger (5) in oder an einem Gegenstand (4) angeordnet ist und sowohl das Basisgerät (1) als auch der Informationsträger (5) Ultraschallsende- und Empfangseinheiten (3, 39) aufweisen und die Ultraschallsende- und Empfangseinheit (3) des Basisgerätes (1) zur Herstellung eines direkten Kurzzeitkontaktes mit dem Gegenstand (4) ausgebildet ist.

4. Anordnung nach Patentanspruch 3, **dadurch gekennzeichnet,**
**dass** der Informationsträger (5) eine Energieversorgungseinheit (10) und eine Informationssendeeinheit (12) und/oder eine Informationsempfangseinheit (11) aufweist und
**dass** die Energieversorgungseinheit (10) und die Informationssende (12) - und/oder - empfangseinheit (11) des Informationsträgers (5) über gemeinsam verwendete Bauteile verfügen oder völlig in einer Einheit (27) vereinigt sind.

5. Anordnung nach Patentanspruch 3, **dadurch gekennzeichnet,**
**dass** alle Elemente des Informationsträgers (5) auf einer gemeinsamen Unterlage (8,20) angeordnet sind.

6. Anordnung nach Patentanspruch 3, **dadurch gekennzeichnet,**
**dass** der Informationsträger (5) eine mikrosystemtechnische Grössenordnung aufweist und/oder aus mikrosystemtechnischen Elementen besteht.

7. Anordnung nach Patentanspruch 3, **dadurch gekennzeichnet,**
**dass** der Informationsträger (5) ein kompakter, allseitig vergossener Körper ist.

8. Anordnung nach Patentanspruch 3, **dadurch gekennzeichnet,**
**dass** alle Elemente des Informationsträgers (5) innerhalb einer Kapsel (7) angeordnet sind und diese Kapsel (7) aus Metall und/oder einem organischen Material, wie polymerem Kunststoff aller Art, und/oder einem anorganischem Material, wie Keramik, Glas, Cermet, Stein, Mineral oder Edelstein und/oder Verbundstoffen aller Art besteht.

9. Anordnung nach einem der voranstehenden Patentansprüche, **dadurch gekennzeichnet,**
**dass** sich am Informationsträgers (5) mindestens zwei metallische Anschlussstellen (21) befinden, die elektrisch leitend mit elektronischen Komponenten des Informationsträgers (5) verbunden sind und eine zusätzliche elektrische Energie- sowie eine Informationsübertragung erlauben.

10. Anordnung nach einem der voranstehenden Patentansprüche, **dadurch gekennzeichnet,**
**dass** aussenseitig am Gegenstand (4) zwei metallische Teile (22) angeordnet sind, die elektrisch leitend mit den metallischen Anschlussstellen (21) nach Patentanspruch 9 verbunden sind und eine zusätzliche elektrische Energie- sowie eine Informationsübertragung zum Informationsträger (5) erlauben.

11. Anordnung nach einem der voranstehenden Patentansprüche, **dadurch gekennzeichnet,**
**dass** aussenseitig am Gegenstand (4) ein metallisches Element (31) ohne eine elektrische Funktion zur Informations- oder Energieübertragung angeordnet ist, welches bei Berührung der Ultraschallsende- und Empfangseinheit (3) des Basisgerätes (1), oder des Basisgerätes (1) selbst, dort zwei Kontakte (28) überbrückt und damit eine Aktion auslöst.

12. Anordnung nach einem der voranstehenden Patentansprüche, **dadurch gekennzeichnet,**
**dass** der Gegenstand (4) die Funktion eines Schlüssels besitzt.

13. Anordnung nach Patentanspruch 12, **dadurch gekennzeichnet,**
**dass** der Gegenstand (4) nicht als Schlüssel erkennbar ist.

14. Anordnung nach einem der voranstehenden Patentansprüche, **dadurch gekennzeichnet,**
**dass** der Informationsträger (5) in einem Schmuckgegenstand, insbesondere in einem Fingerring, angeordnet ist.

15. Anordnung nach einem der voranstehenden Patentansprüche, **dadurch gekennzeichnet,**
**dass** der Informationsträger (5) in einer Karte angeordnet ist.

16. Anordnung nach einem der voranstehenden Patentansprüche, **dadurch gekennzeichnet,**
**dass** der Informationsträger (5) in einem Fahrzeugteil angeordnet ist.

17. Anordnung nach Anspruch 3, **dadurch gekennzeichnet,**
**dass** der Gegenstand (4) eine Ausnehmung (6, 19, 34) aufweist und innerhalb der Ausnehmung (6, 19, 34) der Informationsträger (5) in akustisch fester Kopplung zum Gegenstand (4) angeordnet ist.

18. Anordnung nach Anspruch 17, **dadurch gekennzeichnet,**
**dass** die Ausnehmung (6, 19, 34) einen Verschluss (23, 36) aufweist, der nach Material und Form der Umgebung der Ausnehmung (6, 19, 34) oder des Gegenstandes (4) insgesamt angepasst ist.

## Claims

1. A method for energy and information transmission via ultrasound between a base device and an electronic information carrier being arranged in an acoustically fixed coupling in or on an article, said information carrier containing defined stored information, wherein said base device as well as said information carrier comprise ultrasonic transmitting and receiving units, and wherein
- the basic device transmits ultrasound into the article when the base device and the article are engaged with each other by a direct short-time contact at the contact area formed therewith,
- the information carrier takes energy from the ultrasonic field in the article on the engagement during the short-time contact, thus being switched on and
- entering the operating state and
- triggering an ultrasonic information transmission between the information carrier and the base device via the contact area.

2. A method according to Claim 1, **characterised in that**
said information stored in said information carrier serve to identify and/or describe the article and/or describe its state and/or its logistic data and/or its production data or said information represents codes.

3. An arrangement to implement the method according to Claim 1, comprising a base device (1) and an information carrier (5), wherein the information carrier (5) is arranged in or on an article (4) and wherein said base device (1) as well as the information carrier (5) comprise ultrasonic transmitting and receiving units (3, 39) and wherein said ultrasonic transmitting and receiving unit (3) of said base device (1) is formed so as to allow a direct short-time contact with said article (4).

4. An arrangement according to Claim 3, **characterised in that**
said information carrier (5) comprises an energy supply unit (10) and an information transmitting unit (12) and/or an information receiving unit (11), and
said energy supply unit (10) and said information transmitting (12) and/or receiving unit (11) of said information carrier (5) include components used in common, or are united completely to form a unit (27).

5. An arrangement according to Claim 3, **characterised in that**
all elements of said information carrier (5) are arranged on a common base (8, 20).

6. An arrangement according to Claim 3, **characterised in that**
said information carrier (5) comprises a microsystems engineering dimension and/or consists of microsystems engineering elements.

7. An arrangement according to Claim 3, **characterised in that**
said information carrier (5) forms a compact body embedded on all sides.

8. An arrangement according to Claim 3, **characterised in that**
all elements of said information carrier (5) are arranged within a capsule (7), and such that said capsule (7) consists of metal and/or an organic material, such as polymeric plastic of any type, and/or an inorganic material, such as ceramic, glass, cermet, stone, mineral or precious stone and/or composites of any type.

9. An arrangement according to any of the preceding Claims, **characterised in that**
on the outside of said information carrier (5), there are located at least two metallic points of contact (21), connected in an electrically conductive manner to electronic components of said information carrier (5) and permitting a transmission of both electric energy and information.

10. An arrangement according to any of the preceding Claims, **characterised in that**
on the outside of said functional article (4), there are arranged at least two metallic parts (22), connected in an electrically conductive manner to said metallic points of contact (21) according to Claim 9 and permitting a transmission of both electric energy and information to said information carrier (5).

11. An arrangement according to any of the preceding Claims, **characterised in that**
on the outside of said functional article (4), there is arranged a metallic element (31) having no electric function for the transmission of information or energy, which upon contacting said ultrasonic transmitting and receiving unit (3) of said base device (1), or said base device (1) itself, bridges two contacts (28) thereon and triggers an action thereby.

12. An arrangement according to any of the preceding Claims, **characterised in that**
said functional article (4) has the function of a key.

13. An arrangement according to Claim 12, **characterised in that**
said functional article (4) is not recognisable as a key.

14. An arrangement according to any of the preceding Claims, **characterised in that**
said information carrier (5) is arranged in a piece of jewellery, more particularly, in a ring for a finger.

15. An arrangement according to any of the preceding Claims, **characterised in that**
said information carrier (5) is arranged in a card.

16. An arrangement and a method according to any of Claims 1 to 13, **characterised in that**
said information carrier (5) is arranged in a vehicle member.

17. An arrangement according to Claim 3, **characterised in that**
said functional article (4) comprises a recess (6, 19, 34) and that the information carrier (5) is arranged inside said recess in an acoustically fixed coupling with said functional article (4).

18. An arrangement according to Claim 17, **characterised in that**
said recess (6, 19, 34) comprises a closure (23, 26) being adapted in its material and shape to the surrounding area of said recess (6, 19, 34) or the entire functional article (4).

## Revendications

1. Procédé de transmission d'énergie et d'information au moyen d'ultrasons entre un appareil de base et un support d'informations électronique placé dans ou sur un objet en couplage acoustique fixe, support qui contient des informations mémorisées bien définies, l'appareil de base ainsi que le support d'informations présentant des unités d'émission et de réception à ultrasons et
- en cas de jonction de l'appareil de base avec l'objet par élaboration d'un contact direct de courte durée par l'intermédiaire du point de contact ainsi formé, l'appareil de base émet des ultrasons dans l'objet,
- le support d'information soutire durant ce contact de courte durée de l'énergie au champ à ultrasons dans l'objet au moment du contact, sera ainsi mis en marche et
o passe en mode de service et
o déclenche une transmission d'informations ultrasons entre le support d'informations et l'appareil de base par l'intermédiaire du point de contact.

2. Procédé selon la revendication 1, se caractérisant par le fait que
les informations mémorisées dans le support d'informations servent de caractérisation de l'objet et/ou de description de l'objet et/ou de description de son état et/ou de description de ses données logiques et/ou de ses données de production ou sont des codes.

3. Configuration pour l'exécution du procédé selon la revendication 1 avec un appareil de base (1) et un support d'information (5), un support d'informations (5) étant placé dans ou sur un objet (4) et l'appareil de base (1) ainsi que le support d'informations (5) présentant des unités d'émission et de réception à ultrasons (3, 39) et l'unité d'émission et de réception à ultrasons (3) de l'appareil de base (1) étant développée pour établir un contact direct de courte durée avec l'objet (4).

4. Configuration selon la revendication 3, se caractérisant par le fait que
le support d'informations (5) présente une unité d'alimentation en énergie (10) et une unité émettrice d'informations (12) et/ou une unité réceptrice d'informations (11) et
que l'unité d'alimentation en énergie (10) et l'unité d'émission (12) et/ou de réception d'informations (11) du support d'informations (5) disposent d'éléments utilisés en commun ou sont entièrement réunies sous forme d'une seule unité (27).

5. Configuration selon la revendication 3, se caractérisant par le fait que
tous les éléments du support d'informations (5) sont placés sur un support commun (8, 20).

6. Configuration selon la revendication 3, se caractérisant par le fait que
le support d'informations (5) présente une dimension de type microsystème et/ou se compose d'éléments de type microsystème.

7. Configuration selon la revendication 3, se caractérisant par le fait que
le support d'informations (5) est un corps compact, scellé de toutes parts.

8. Configuration selon la revendication 3, se caractérisant par le fait que
tous les éléments du support d'informations (5) sont placés dans une capsule (7) que et cette capsule (7) se compose de métal et/ou d'un matériau organique, tel que les plastiques polymères de tout genre, et/ou d'un matériau anorganique, tel que la céramique, le verre, le cermet, la pierre, le minéral ou la pierre précieuse et/ou de matériau composite de toute genre.

9. Configuration selon l'une des revendications précédentes, se caractérisant par le fait que deux points de raccords métalliques (21) au moins se trouvent sur le support d'informations (5), points qui seront reliés en conduction électrique avec les composantes électroniques du support d'informations (5) et permettent une transmission d'énergie électrique supplémentaire ainsi qu'une transmission d'information.

10. Configuration selon l'une des revendications précédentes, se caractérisant par le fait que sur la face extérieure de l'objet (4) se trouvent deux pièces métalliques (22) qui sont reliées en conduction électrique avec les points de raccord métalliques (21) selon la revendication 9 et permettent une transmission d'énergie électrique supplémentaire ainsi qu'une transmission d'information vers le support d'informations (5).

11. Configuration selon l'une des revendications précédentes, se caractérisant par le fait que sur la face extérieure de l'objet (4), se trouve un élément métallique (31) ne remplissant aucune fonction électrique de transmission d'information ou d'énergie mais au contact de l'unité de fin et de réception à ultrasons (3) de l'appareil de base (1) ou au contact de l'appareil de base (1) même, y pontant deux contacts (28) et déclenchant ainsi une action.

12. Configuration selon l'une des revendications précédentes, se caractérisant par le fait que l'objet (4) possède la fonction d'un code.

13. Configuration selon la revendication 12, se caractérisant par le fait que
l'objet (4) n'est pas perceptible en tant que code.

14. Configuration selon l'une des revendications précédentes, se caractérisant par le fait que le support d'informations (5) est placé dans un bijou, en particulier dans une bague à doigt.

15. Configuration selon l'une des revendications précédentes, se caractérisant par le fait que le support d'informations (5) est placé dans une carte.

16. Configuration selon l'une des revendications précédentes, se caractérisant par le fait que le support d'informations (5) est placé dans une pièce de véhicule.

17. Configuration selon la revendication 3, se caractérisant par le fait que
l'objet (4) présente un creux (6, 19, 34) et que le support d'informations (5) à l'intérieur du creux (6, 19, 34) soit placé en couplage acoustique fixe par rapport à l'objet (4).

18. Configuration selon la revendication 17, se caractérisant par le fait que
le creux (6, 19, 34) présente une fermeture (23, 36) qui est complètement adaptée quant au matériau et á la forme à l'environnement du creux (6, 19, 34) ou de l'objet (4).
